# EUROPEAN PATENT APPLICATION

(11) **EP 2 403 083 A1**
(43) Date of publication of application: **04.01.2012**
(21) Application number: 11171438.2
(22) Date of filing: 27.06.2011
(51) Int. Cl.: H02G 3/04, H02G 3/32, F16L 3/227, F16L 3/24, F16L 3/10

(54) **Cable guide, bracket and associated assembly for positioning and holding cables on fixed support parts.**

(30) Priority: 02.07.2010 IT MI20101218
(71) Applicant: SIAE Microelettronica S.p.A., 20093 Cologno Monzese (MI) (IT)
(72) Inventor: Magistroni, Claudio, 20093 COLOGNO MONZESE (IT); Bugo, Domenico, 20093 COLOGNO MONZESE (IT)
(74) Representative: Raimondi, Margherita

(57) **Abstract**

Cable guide for joining to a cable (1), comprising a body (300) formed by a female half-body (310) and by a male half-body (320) extending in a longitudinal direction (X-X) and with a concave internal volume (310a), there being provided a pair of hinges (301) with a longitudinal axis (X-X) for connecting together the said half-bodies (310,320) and each half-body also having a pair of lugs (310b) extending in the longitudinal direction (X-X) on both the side surfaces and arranged opposite each other in the same longitudinal direction.

## Description

### DESCRIPTION

The present invention relates to a cable guide, a bracket and an associated assembly for positioning and holding cables on fixed support parts.

It is known in the technical sector of radio transmissions that it is required to install transceiver apparatus at great heights on pylons, towers and the like and it is also known that it is required to connect these apparatus to devices located on the ground by means of special cables which must be connected at the two ends, guided and fixed to the said pylons along their downward section.

Also known are devices specially designed for this purpose and essentially comprising means which can be applied to the cable, in order to guide and hold it, and which can be fastened to corresponding brackets for fixing to parts of the pylon.

Although performing their function, these known devices have, however, various drawbacks arising from the fact that the operations for mounting the cable guide on the cable, positioning it along the latter and adjusting it on the fixing bracket in a direction perpendicular to the cable are complicated and require the use of manual tools in order to force the corresponding parts together, which means that it is not possible to perform operations with both hands free.

These disadvantages are increased still further by the fact that the installation engineer is working at a considerable height on the pylon in awkward and potentially dangerous conditions.

The technical problem which is posed therefore is to provide a cable guide which can be joined to brackets for fixing to uprights, such as pylons and the like, and a corresponding fixing bracket able to co-operate with this cable guide, these parts being quick and easy to fit and adjust, without requiring the use of tools so as to allow the installation engineer to use both hands for the tightening and positioning operations.

In connection with this problem it is also required that this device should have a low cost and be easy and inexpensive to produce and assemble.

These results are achieved according to the present invention by a cable guide according to Claim 1, a bracket according to Claim 7 and an associated assembly according to Claim 9 for positioning and holding cables on fixed support parts.

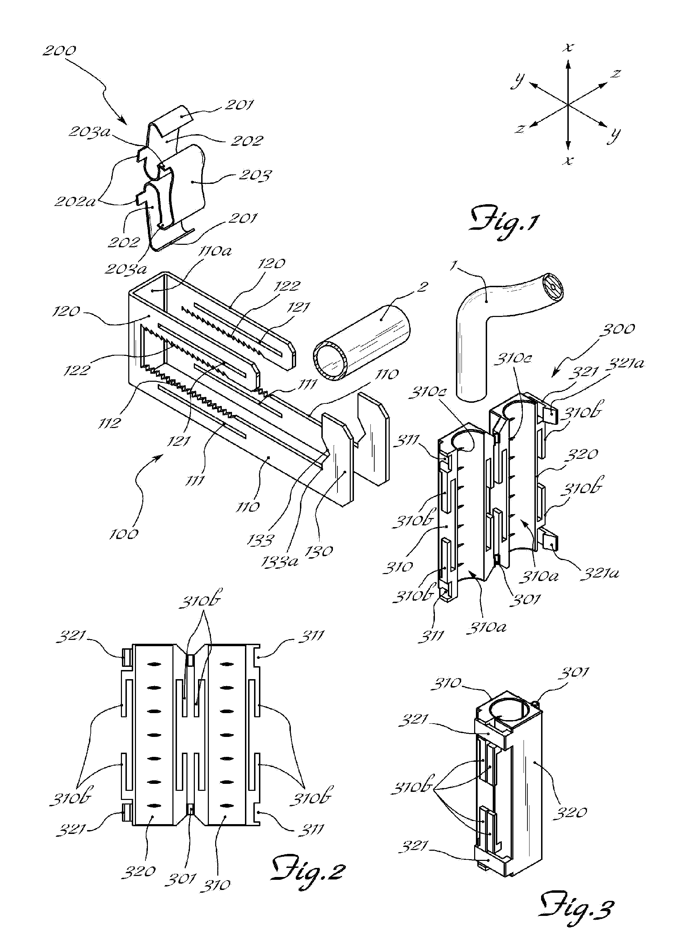

Further details may be obtained from the following description of a non-limiting example of embodiment of the subject of the present invention provided with reference to the accompanying drawings in which:
- Figure 1:: is an exploded view of the cable guide and the associated fixing bracket according to the present invention;
- Figure 2:: is a front view from outside of the cable guide according to Fig. 1 in the open condition;
- Figure 3:: is a perspective view of the cable guide according to Fig. 1 in the closed condition;
- Figure 4:: is perspective view of the cable guide and the associated fixing bracket during assembly;
- Figure 5:: is a front view of the cable guide closed around a cable and in the outer end-of-travel position on the associated fixing bracket and
- Figure 6:: is a front view of the cable guide closed around a cable and during variation of its relative position with respect to the fixing bracket.
As shown in Fig. 1 and assuming solely for the sake of convenience of description and without any limitation of meaning a set of three reference axes in a longitudinal direction X-X, corresponding to the direction of the cable, transverse direction Y-Y and vertical direction Z-Z, respectively, as well as a front part corresponding to the part for fixing the bracket to an upright section 2 and a rear part opposite to the front part, the cable guide according to the invention for a cable 1 extending in the longitudinal direction X-X comprises essentially:
- a body 300 formed by a female half-body 310 and by a male half-body 320 extending in a longitudinal direction X-X and connected together in the transverse direction by at least one hinge 301, preferably two hinges, arranged at the opposite ends of the cable guide, with a longitudinal axis X-X, said half-bodies having a concave internal volume 310a with a preferably semi-circular cross-section having an inner radius such as to produce a small amount of relative friction with the cable 1 so as to allow a controlled movement, but not free sliding of the former on the latter.

Each half-body also has pairs of lugs 310b extending in the longitudinal direction X-X on both the side surfaces, said lugs being arranged opposite each other in the same longitudinal direction and formed in a position lying between the two hinges 301 in the longitudinal direction (X-X).

Each half-body 310 is preferably provided internally with nibs 310c extending in the vertical direction Z-Z and designed to interfere with the said cable upon complete closure of the two half-bodies so as to prevent relative slipping of the cable guide.

The outer surface of the female half-body 310 has, formed thereon, locating elements 311 projecting in the transverse direction Y-Y and designed to engage with corresponding teeth 321a of resilient lugs 321 extending in the same direction Y-Y from the outer surface of the male half-body 320, so as to ensure closure of the cable guide obtained by rotating the two half-bodies about the hinge 301 as shown in Fig. 3.

The bracket 100 for fixing to an upright 2 and carrying the cable guide comprises two first arms 110 which are parallel to each other and to the transverse direction Y-Y, being connected in the vertical direction Z-Z by a wall 110a for forming a substantially C-shaped element.

The first arms 110 have a respective first eyelet 111 extending over a predefined length in the transverse direction Y-Y and a first set of sawteeth 112 directed towards the front part of the bracket, extending in the same transverse direction.

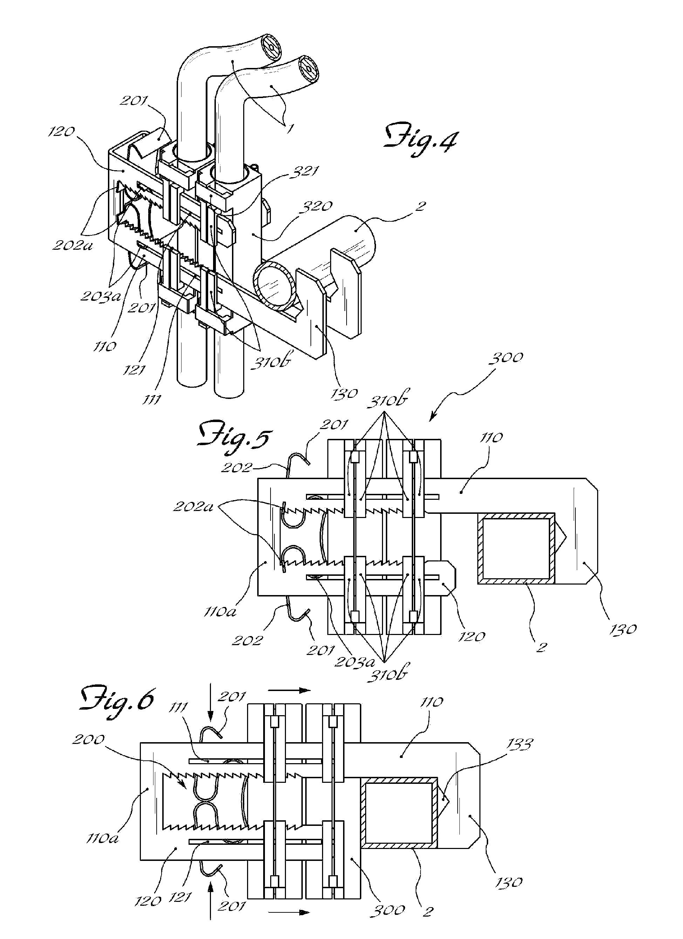

The free front end of said first arms 110 is formed in the manner of a respective longitudinal hook 130, the inner surface of which is preferably shaped as a recess 133 situated between two longitudinal flat sections 133a respectively designed to engage with fixing parts 2 having a circular cross-section as shown in Fig. 1 or polygonal cross-section as shown in Fig. 5.

Two second arms 120 parallel to each other and to the said first arms 110 extend from the rear wall 110a in the transverse direction Y-Y; each second arm has a respective second eyelet 121 extending over a predefined length in the transverse direction Y-Y and a second set of sawteeth 122 directed towards the front part of the bracket and formed in its inner surface and situated opposite to the said first set of teeth 112 of the first arm 110.

An omega spring 200 is associated with the bracket 100, said spring having folded portions 201 at the free opposite ends of the longitudinal arms 202, vertical lugs 202a extending outwards from the sides of said arms 202 and transverse tongues 203a extending outwards from the sides of the central arm 203 itself.

With these configurations the operating principle of the cable guide according to the invention is as follows:
- the bracket 100 is arranged with the spring 200 inside it so that the transverse tongues 203a are inserted into the respective eyelets 111,121 of the associated first transverse arms 110 and second transverse arms 120 and the longitudinal tongues 202a engage with the corresponding teeth 112,122 of the said associated arms,
- the open cable guide 300 is gripped and, with one hand, is closed around the cable 1 by means of the lugs 321 which snap-engage onto the teeth 311; in this condition the cable guide is still able to slide with friction owing to the slight difference between the inner/outer diameters and the action of the nibs inside each half-body;
- the cable guide 300 is mounted on the first arms 110 and second arms 120 of the bracket by means of the cable guide lugs 310b;
- the cable guide 300 is slid until the bracket 100 is positioned next to the fixing tube 2 and engages with it by means of the hook-shaped part 130;
- having freed one hand, the same hand is used to compress the spring 200 in the longitudinal direction X-X so as to release the lugs 202a from the associated teeth 112,122 and the spring is displaced in the transverse direction Y-Y guided by the lugs 203a until the cable clamp 200 reaches the desired position;
- the spring 200 is released so that the lugs 202a automatically engage with the teeth 112,122 onto which it is locked in position, also producing a further thrusting force on the adjacent half-body which grips the cable guide on the cable 1.

If a maintenance operation must be performed, the opposite sequence of operations is performed, freeing the spring, moving it backwards and extracting the cable guide from the bracket, opening the bracket so as to access the cable and repeating the operation described for a new mounting operation.

It is therefore clear how the device according to the invention allows actions to be performed in an easy and intuitive manner, without the need for auxiliary tools which prevent the use of both hands for the various operations; these operations can therefore be performed in an easy, quick and precise manner even in precarious conditions such as those which exist when working at a considerable height on pylons for radio equipment and the like. In addition, the characteristics of the spring ensure a uniform clamping force on the cable over time even when the cable and/or cable guide is/are subject to any deformation due to variations in temperature of the atmosphere and/or ageing of the materials.

Although described in connection with certain constructional forms and certain preferred examples of embodiment of the invention, it is understood that the scope of protection of the present patent is defined solely by the following claims.

## Claims

1. Cable guide for joining to a cable (1), comprising a body (300) formed by a female half-body (310) and by a male half-body (320) extending in a longitudinal direction (X-X) and with a concave internal volume (310a); **characterized in that** it comprises a pair of hinges (301) with a longitudinal axis for connecting together the said half-bodies (310,320) and **in that** each half-body also has a pair of lugs (310b) extending in the longitudinal direction (X-X) on both the side surfaces and arranged opposite each other in the same longitudinal direction.

2. Cable guide according to Claim 1, **characterized in that** said longitudinal lugs (310b) are formed in a position lying between the two hinges (301) in the longitudinal direction (X-X).

3. Cable guide according to Claim 1, **characterized in that** the outer surface of the male half-body (320) is provided with resilient lugs (321) extending in the same direction (Y-Y) and able to engage with corresponding elements of the female half-body (310) in order to close the cable guide.

4. Cable guide according to Claim 3, **characterized in that** the outer surface of the female half-body (310) has locating elements (311) projecting in the transverse direction (Y-Y) and able to engage with said resilient lugs (321) of the male half-body (320).

5. Cable guide according to Claim 1, **characterized in that** it has a semicircular internal cross-section with an inner radius slightly smaller than the outer radius of the cable (1).

6. Cable guide according to Claim 1, **characterized in that** the inner surface of each half-body (310,320) has nibs (310c) extending in the vertical direction (Z-Z).

7. Bracket (100) for fixing to an upright (2) and carrying the cable guide (300) according to Claim 1, **characterized in that** it comprises two first arms (110), which are parallel to each other and to the transverse direction (Y-Y) and are connected in the vertical direction (Z-Z) by a wall (110a) so as to form a substantially C-shaped element, and two second arms (120), which are parallel to each other and to the said first arms (110), extending from said wall (110a), the front free end of each arm (110,120) being formed in the manner of a respective longitudinal hook (130), **in that** each arm (110,120) has a respective eyelet (111,121) extending over a predetermined length in the transverse direction (Y-Y) and a respective set of teeth (112,122) directed towards the front part of the bracket and extending in the transverse direction (Y-Y) and **in that** also envisaged are an omega spring (200) able to be housed inside the bracket and provided with folded portions (201) at the opposite free ends of the longitudinal arms (202), vertical lugs (202a) extending outwards from the sides of the said arms (202) and being able to engage with said teeth (112,122), and transverse tongues (203a) extending outwards from the sides of the central arm (203) itself and able to be inserted inside said eyelets (111,121) of the arms (110, 120) of the bracket (100).

8. Bracket according to Claim 7, **characterized in that** said front hook (130) is shaped in the manner of a recess (133) lying between two longitudinal flat sections (133a).

9. Assembly for positioning and holding a cable (1) on a fixed part (2), **characterized in that** it comprises a cable guide (300) according to Claim 1 and a bracket (100,200) according to Claim 7 and **in that** said cable guide is translatable on the arms of the bracket by means of longitudinal lugs (310b).

10. Assembly according to Claim 9, **characterized in that** it comprises a rear end-of-travel stop for translation of the cable guide, consisting of said omega spring (200).

11. Assembly according to Claim 9, **characterized in that** said fixed part (2) is a pylon supporting radio transceiver devices.
